# EUROPEAN PATENT APPLICATION

(11) **EP 3 060 017 A1**
(43) Date of publication of application: **24.08.2016**
(21) Application number: 13895594.3
(22) Date of filing: 18.10.2013
(51) Int. Cl.: H04W 56/00

(54) **METHOD AND DEVICE OF INITIAL SYNCHRONIZATION BETWEEN D2D UES**

(71) Applicant: Huawei Technologies Co., Ltd., Longgang District Shenzhen, Guangdong 518129 (CN)
(72) Inventor: YU, Zhiqin, Shenzhen Guangdong 518129 (CN); ZHANG, Weiliang, Shenzhen Guangdong 518129 (CN)
(74) Representative: Isarpatent
(86) International application number: PCT/CN2013/085499
(87) International publication number: WO 2015/054903

(57) **Abstract**

A method and a device for initial synchronization between D2D terminals are used to implement initial synchronization between the D2D terminals. In the present invention, a D2D master terminal measures a time-frequency resource set used to transmit a synchronization signal, and reports a measurement result to a network device; the D2D master terminal receives a synchronization resource that is allocated by the network device to the D2D master terminal according to the measurement result reported by the D2D master terminal; and the D2D master terminal sends the synchronization signal according to the synchronization resource allocated to the D2D master terminal.

## Description

### TECHNICAL FIELD

The present invention relates to the field of wireless communications technologies, and in particular, to a method and a device for initial synchronization between D2D terminals.

### BACKGROUND

Outdoor coverage that can be achieved by an existing macro network is higher than indoor coverage, and especially in places such as an indoor corner or a basement, communication cannot be performed due to low signal strength. However, many applications need to run indoors. For example, in an application of a smart meter, the meter installed in the basement is expected to periodically report data to an electric power company over a network, which requires that communication can also be performed with the network in an indoor area with relatively weak signal.

For a purpose of indoor coverage, one solution is to increase indoor access points, which, however, requires huge investments by an operator.

Currently, a new solution to coverage enhancement is put forward, which can reduce network construction costs for the operator while providing network coverage enhancement. This solution may be referred to as a Twin UE solution. Twin UEs include two UEs (User Equipment, user equipment, namely, a terminal). One is a master terminal, referred to as a DM-UE (D2D master UE, D2D master terminal; D2D: device-to-device, device-to-device), and the other is a slave terminal, referred to as a DS-UE (D2D slave UE, D2D slave terminal).

To enable the DS-UE to receive data from a network and enable the DS-UE to send data to the network, it needs to be ensured that the DM-UE and the DS-UE are synchronized with a network side. Because the DM-UE is located within network coverage and can implement synchronization with the network side, the DM-UE and the DS-UE can be synchronized with the network side by means of synchronization between the DS-UE and the DM-UE. However, a solution to synchronization between the DM-UE and the DS-UE has not been provided currently.

### SUMMARY

Embodiments of the present invention provide a method and a device for initial synchronization between D2D terminals, so as to implement initial synchronization between the D2D terminals.

According to a first aspect, a method for initial synchronization between device-to-device D2D terminals is provided, where the method includes:
measuring, by a D2D master terminal, a time-frequency resource set used to transmit a synchronization signal, and reporting a measurement result to a network device; receiving, by the D2D master terminal, a synchronization resource that is allocated by the network device to the D2D master terminal according to the measurement result reported by the D2D master terminal; and sending, by the D2D master terminal, the synchronization signal according to the synchronization resource allocated to the D2D master terminal.

With reference to the first aspect, in a first possible implementation manner, the measuring, by a D2D master terminal, a time-frequency resource set used to transmit a synchronization signal includes: performing, by the D2D master terminal, measurement according to the time-frequency resource set that is preset on the D2D master terminal and used to transmit the synchronization signal; or acquiring, by the D2D master terminal from a broadcast message sent by the network device, the time-frequency resource set used to transmit the synchronization signal, and performing measurement according to the acquired time-frequency resource set.

With reference to the first aspect, in a second possible implementation manner, the D2D master terminal reports the measurement result to the network device after initiating network access and accessing a network; and the D2D master terminal reports an access reason and a terminal type in a process of the network access, the access reason is measurement reporting, and the terminal type is the D2D master terminal.

With reference to the first aspect or either of the first and second possible implementation manners of the first aspect, in a third possible implementation manner, the synchronization resource includes a time-frequency resource used to transmit the synchronization signal; and
the sending, by the D2D master terminal, the synchronization signal according to the synchronization resource allocated to the D2D master terminal includes:
after receiving the time-frequency resource that is allocated by the network device to the D2D master terminal and used to transmit the synchronization signal, sending, by the D2D terminal, the synchronization signal immediately at a location of the allocated time-frequency resource used to transmit the synchronization signal; or
after receiving the time-frequency resource that is allocated by the network device to the D2D master terminal and used to transmit the synchronization signal and when receiving a synchronization instruction sent by the network device, sending, by the D2D terminal, the synchronization signal at a location of the allocated time-frequency resource used to transmit the synchronization signal, where the synchronization instruction is sent by the network device when the network device learns that a D2D slave terminal corresponding to the D2D terminal accesses the network.

With reference to the third possible implementation manner of the first aspect, in a fourth possible implementation manner, the synchronization resource further includes a time-frequency resource used to transmit synchronization feedback information; and the method further includes:
receiving, by the D2D master terminal according to the time-frequency resource used to transmit the synchronization feedback information, the synchronization feedback information sent by the D2D slave terminal corresponding to the D2D master terminal, and decreasing transmit power of the synchronization signal when the received synchronization feedback information is a power decreasing instruction.

With reference to the fourth possible implementation manner of the first aspect, in a fifth possible implementation manner, if a quantity of D2D slave terminals corresponding to the D2D master terminal is at least 2, the D2D master terminal decreases the transmit power of the synchronization signal after power decreasing instructions sent by all the D2D slave terminals corresponding to the D2D master terminal are received.

According to a second aspect, a method for initial synchronization between device-to-device D2D terminals is provided, where the method includes:
acquiring, by a D2D slave terminal, a synchronization resource of a D2D master terminal corresponding to the D2D slave terminal, where the synchronization resource includes a time-frequency resource used to transmit a synchronization signal; receiving, by the D2D slave terminal according to the time-frequency resource that is used to transmit the synchronization signal and is in the acquired synchronization resource, the synchronization signal sent by the D2D master terminal corresponding to the D2D slave terminal; and performing, by the D2D slave terminal according to the received synchronization signal, synchronization with the D2D master terminal corresponding to the D2D slave terminal.

With reference to the second aspect, in a first possible implementation manner, the acquiring, by a D2D slave terminal, a synchronization resource of a D2D master terminal corresponding to the D2D slave terminal includes:
performing, by the D2D slave terminal, signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determining a time-frequency resource used by the signal that is currently obtained by means of search as the time-frequency resource used by the D2D master terminal corresponding to the D2D slave terminal to transmit the synchronization signal; or
receiving, by the D2D slave terminal, the synchronization resource of the D2D master terminal corresponding to the D2D slave terminal, where the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

With reference to the first possible implementation manner of the second aspect, in a second possible implementation manner, after initiating network access and accessing a network, the D2D slave terminal receives the synchronization resource of the D2D master terminal corresponding to the D2D slave terminal, where the synchronization resource is notified by the network device; and the D2D slave terminal reports a terminal type in a process of the network access, where the terminal type is the D2D slave terminal; and
the method further includes: after receiving the synchronization resource of the D2D master terminal corresponding to the D2D slave terminal, initiating, by the D2D slave terminal, a process of releasing a link from the network device, where the synchronization resource is notified by the network device.

With reference to the second aspect or either of the first and second possible implementation manners of the second aspect, in a third possible implementation manner, the synchronization resource further includes a time-frequency resource used to transmit synchronization feedback information; and the method further includes:
sending, by the D2D slave terminal according to the time-frequency resource used to transmit the synchronization feedback information, the synchronization feedback information to the D2D master terminal corresponding to the D2D slave terminal.

With reference to the third possible implementation manner of the second aspect, in a fourth possible implementation manner, the sending the synchronization feedback information to the D2D master terminal corresponding to the D2D slave terminal includes:
if strength of the synchronization signal that is sent by the D2D master terminal corresponding to the D2D slave terminal and received by the D2D slave terminal exceeds a set threshold, sending a power decreasing instruction to the D2D master terminal corresponding to the D2D slave terminal, where the power decreasing instruction is used to instruct the D2D master terminal to decrease transmit power of the synchronization signal; or
if the D2D slave terminal completes, according to the received synchronization signal, synchronization with the D2D master terminal corresponding to the D2D slave terminal, sending a synchronization confirmation instruction to the D2D master terminal corresponding to the D2D slave terminal.

According to a third aspect, a method for initial synchronization between device-to-device D2D terminals is provided, where the method includes:
receiving, by a network device, a measurement result of a time-frequency resource set used to transmit a synchronization signal, where the measurement result is reported by a D2D master terminal;
allocating, by the network device, a synchronization resource to the D2D master terminal according to the measurement result; and
notifying, by the network device to the D2D master terminal, the synchronization resource allocated to the D2D master terminal.

With reference to the third aspect, in a first possible implementation manner, the method further includes: notifying, by the network device to a D2D slave terminal corresponding to the D2D master terminal, the synchronization resource allocated to the D2D master terminal.

With reference to the third aspect, in a second possible implementation manner, the method further includes: after learning that the D2D slave terminal corresponding to the D2D master terminal accesses a network, instructing, by the network device, the D2D master terminal to send the synchronization signal.

With reference to the third aspect, in a third possible implementation manner, after receiving a message that is used to notify that the D2D slave terminal has camped on a macro cell and sent by the D2D slave terminal corresponding to the D2D master terminal, the network device instructs the D2D master terminal to stop sending the synchronization signal.

With reference to the third aspect or any one of the first to third possible implementation manners of the third aspect, in a fourth possible implementation manner, the synchronization resource includes a time-frequency resource used to transmit the synchronization signal, or includes a time-frequency resource used to transmit the synchronization signal and a time-frequency resource used to transmit synchronization feedback information.

According to a fourth aspect, a device-to-device D2D terminal is provided, including:
a measurement module, configured to measure a time-frequency resource set used to transmit a synchronization signal, and report a measurement result of the measurement module to a network device;
a synchronization resource configuration module, configured to receive a synchronization resource that is allocated by the network device to the D2D master terminal according to the measurement result measured and reported by the measurement module; and
a synchronization signal transmission module, configured to send the synchronization signal according to the synchronization resource that is allocated to the D2D master terminal and received by the synchronization resource configuration module.

With reference to the fourth aspect, in a first possible implementation manner, the measurement module is specifically configured to perform measurement according to the time-frequency resource set that is preset on the D2D master terminal and used to transmit the synchronization signal; or acquire, from a broadcast message sent by the network device, the time-frequency resource set used to transmit the synchronization signal, and perform measurement according to the acquired time-frequency resource set.

With reference to the fourth aspect, in a second possible implementation manner, the measurement module is specifically configured to report the measurement result to the network device after network access is initiated and a network is accessed, where a network access module of the D2D terminal reports an access reason and a terminal type in a process of the network access, the access reason is measurement reporting, and the terminal type is the D2D master terminal.

With reference to the fourth aspect or either of the first and second possible implementation manners of the fourth aspect, in a third possible implementation manner, the synchronization resource includes a time-frequency resource used to transmit the synchronization signal; and
the synchronization signal transmission module is specifically configured to: after the synchronization resource configuration module receives a time-frequency resource that is allocated by the network device to the D2D master terminal and used to transmit the synchronization signal, send the synchronization signal immediately at a location of the allocated time-frequency resource used to transmit the synchronization signal; or after a time-frequency resource that is allocated by the network device to the D2D master terminal and used to transmit the synchronization signal is received and when a synchronization instruction sent by the network device is received, send the synchronization signal at a location of the allocated time-frequency resource used to transmit the synchronization signal, where the synchronization instruction is sent by the network device when the network device learns that a D2D slave terminal corresponding to the D2D terminal accesses the network.

With reference to the third possible implementation manner of the fourth aspect, in a fourth possible implementation manner, the synchronization resource further includes a time-frequency resource used to transmit synchronization feedback information; and
the synchronization signal transmission module is further configured to receive, according to the time-frequency resource used to transmit the synchronization feedback information, the synchronization feedback information sent by the D2D slave terminal corresponding to the D2D master terminal, and decrease transmit power of the synchronization signal when the received synchronization feedback information is a power decreasing instruction.

With reference to the fourth possible implementation manner of the fourth aspect, in a fifth possible implementation manner, the synchronization signal transmission module is specifically configured to: in a case in which a quantity of D2D slave terminals corresponding to the D2D master terminal is at least 2, decrease the transmit power of the synchronization signal after power decreasing instructions sent by all the D2D slave terminals corresponding to the D2D master terminal are received.

According to a fifth aspect, a device-to-device D2D terminal is provided, including:
a synchronization resource configuration module, configured to acquire a synchronization resource of a D2D master terminal corresponding to the D2D slave terminal, where the synchronization resource includes a time-frequency resource used to transmit a synchronization signal;
a synchronization signal transmission module, configured to receive, according to the time-frequency resource that is used to transmit the synchronization signal and is in the synchronization resource acquired by the synchronization resource configuration module, the synchronization signal sent by the D2D master terminal corresponding to the D2D slave terminal; and
a synchronization module, configured to perform, according to the received synchronization signal, synchronization with the D2D master terminal corresponding to the D2D slave terminal.

With reference to the fifth aspect, in a first possible implementation manner, the synchronization resource configuration module is specifically configured to perform signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determine a time-frequency resource used by the signal that is currently obtained by means of search as the time-frequency resource used by the D2D master terminal corresponding to the D2D slave terminal to transmit the synchronization signal; or receive the synchronization resource of the D2D master terminal corresponding to the D2D slave terminal, where the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

With reference to the first possible implementation manner of the fifth aspect, in a second possible implementation manner, the synchronization resource configuration module is specifically configured to: after the D2D slave terminal initiates network access and accesses a network, receive the synchronization resource of the D2D master terminal corresponding to the D2D slave terminal, where the synchronization resource is notified by the network device, a network access module of the D2D slave terminal reports a terminal type in a process of the network access, and the terminal type is the D2D slave terminal; and
the synchronization resource configuration module is further configured to instruct: after the synchronization resource of the D2D master terminal corresponding to the D2D slave terminal is received, the network access module of the D2D terminal to initiate a process of releasing a link from the network device, where the synchronization resource is notified by the network device.

With reference to the fifth aspect or either of the first and second possible implementation manners of the fifth aspect, in a third possible implementation manner, the synchronization resource further includes a time-frequency resource used to transmit synchronization feedback information; and
the synchronization signal transmission module is further configured to send, according to the time-frequency resource used to transmit the synchronization feedback information, the synchronization feedback information to the D2D master terminal corresponding to the D2D slave terminal.

With reference to the third possible implementation manner of the fifth aspect, in a fourth possible implementation manner, the synchronization signal transmission module is specifically configured to: when strength of the received synchronization signal that is sent by the D2D master terminal corresponding to the D2D slave terminal exceeds a set threshold, send a power decreasing instruction to the D2D master terminal corresponding to the D2D slave terminal, where the power decreasing instruction is used to instruct the D2D master terminal to decrease transmit power of the synchronization signal; or after synchronization with the D2D master terminal corresponding to the D2D slave terminal is completed according to the received synchronization signal, send a synchronization confirmation instruction to the D2D master terminal corresponding to the D2D slave terminal.

According to a sixth aspect, a network device is provided, including:
a receiving module, configured to receive a measurement result of a time-frequency resource set used to transmit a synchronization signal, where the measurement result is reported by a D2D master terminal;
a synchronization resource allocation module, configured to allocate a synchronization resource to the D2D master terminal according to the measurement result received by the receiving module; and
a notification module, configured to notify, to the D2D master terminal, the synchronization resource allocated by the synchronization resource allocation module to the D2D master terminal.

With reference to the sixth aspect, in a first possible implementation manner, the notification module is further configured to notify, to a D2D slave terminal corresponding to the D2D master terminal, the synchronization resource allocated to the D2D master terminal.

With reference to the sixth aspect, in a second possible implementation manner, the notification module is further configured to: after it is learned that the D2D slave terminal corresponding to the D2D master terminal accesses a network, instruct the D2D master terminal to send the synchronization signal.

With reference to the sixth aspect, in a third possible implementation manner, the notification module is further configured to: after a message that is used to notify that the D2D slave terminal has camped on a macro cell and sent by the D2D slave terminal corresponding to the D2D master terminal is received, instruct the D2D master terminal to stop sending the synchronization signal.

With reference to the sixth aspect or any one of the first to third possible implementation manners of the sixth aspect, in a fourth possible implementation manner, the synchronization resource includes a time-frequency resource used to transmit the synchronization signal, or includes a time-frequency resource used to transmit the synchronization signal and a time-frequency resource used to transmit synchronization feedback information. In the foregoing embodiments of the present invention, a D2D master terminal reports, to a network device, a result of measuring a time-frequency resource set used to transmit a synchronization signal, so that the network device allocates a synchronization resource to the D2D master terminal according to the measurement result. In this way, the synchronization signal is sent on the synchronization resource, so as to implement initial synchronization between D2D terminals.

According to a seventh aspect, a device-to-device D2D terminal is provided, including a transceiver and a processor, where:
the processor is configured to: by using the transceiver, measure a time-frequency resource set used to transmit a synchronization signal, and report a measurement result of the measurement module to a network device;
by using the transceiver, receive a synchronization resource that is allocated by the network device to the D2D master terminal according to the measurement result; and
by using the transceiver, send the synchronization signal according to the synchronization resource allocated to the D2D master terminal.

With reference to the seventh aspect, in a first possible implementation manner, the processor is specifically configured to: by using the transceiver, perform measurement according to the time-frequency resource set that is preset on the D2D master terminal and used to transmit the synchronization signal; or by using the transceiver, acquire, from a broadcast message sent by the network device, the time-frequency resource set used to transmit the synchronization signal, and by using the transceiver, perform measurement according to the acquired time-frequency resource set.

With reference to the seventh aspect, in a second possible implementation manner, the processor is specifically configured to: by using the transceiver, report the measurement result to the network device after network access is initiated and a network is accessed, where a network access module of the D2D terminal reports an access reason and a terminal type in a process of the network access, the access reason is measurement reporting, and the terminal type is the D2D master terminal.

With reference to the seventh aspect or either of the first and second possible implementation manners of the seventh aspect, in a third possible implementation manner, the synchronization resource includes a time-frequency resource used to transmit the synchronization signal; and
the processor is specifically configured to: after the synchronization resource configuration module receives a time-frequency resource that is allocated by the network device to the D2D master terminal and used to transmit the synchronization signal, send, by using the transceiver, the synchronization signal immediately at a location of the allocated time-frequency resource used to transmit the synchronization signal; or after a time-frequency resource that is allocated by the network device to the D2D master terminal and used to transmit the synchronization signal is received by using the transceiver and when a synchronization instruction sent by the network device is received by using the transceiver, send, by using the transceiver, the synchronization signal at a location of the allocated time-frequency resource used to transmit the synchronization signal, where the synchronization instruction is sent by the network device when the network device learns that a D2D slave terminal corresponding to the D2D terminal accesses the network.

With reference to the third possible implementation manner of the seventh aspect, in a fourth possible implementation manner, the synchronization resource further includes a time-frequency resource used to transmit synchronization feedback information; and
the processor is further configured to: according to the time-frequency resource used to transmit the synchronization feedback information, by using the transceiver, receive the synchronization feedback information sent by the D2D slave terminal corresponding to the D2D master terminal, and decrease transmit power of the synchronization signal of the transceiver when the received synchronization feedback information is a power decreasing instruction.

With reference to the fourth possible implementation manner of the seventh aspect, in a fifth possible implementation manner, the processor is specifically configured to: in a case in which a quantity of D2D slave terminals corresponding to the D2D master terminal is at least 2, decrease the transmit power of the synchronization signal of the transceiver after power decreasing instructions sent by all the D2D slave terminals corresponding to the D2D master terminal are received by using the transceiver.

According to an eighth aspect, a device-to-device D2D terminal is provided, including a transceiver and a processor, where:
the processor is configured to: by using the transceiver, acquire a synchronization resource of a D2D master terminal corresponding to the D2D slave terminal, where the synchronization resource includes a time-frequency resource used to transmit a synchronization signal;
according to the time-frequency resource that is used to transmit the synchronization signal and is in the acquired synchronization resource, by using the transceiver, receive the synchronization signal sent by the D2D master terminal corresponding to the D2D slave terminal; and
perform, according to the received synchronization signal, synchronization with the D2D master terminal corresponding to the D2D slave terminal.

With reference to the eighth aspect, in a first possible implementation manner, the processor is specifically configured to: by using the transceiver, perform signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determine a time-frequency resource used by the signal that is currently obtained by means of search as the time-frequency resource used by the D2D master terminal corresponding to the D2D slave terminal to transmit the synchronization signal; or, by using the transceiver, receive the synchronization resource of the D2D master terminal corresponding to the D2D slave terminal, where the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

With reference to the first possible implementation manner of the eighth aspect, in a second possible implementation manner, the processor is specifically configured to: after the D2D slave terminal initiates network access and accesses a network, by using the transceiver, receive the synchronization resource of the D2D master terminal corresponding to the D2D slave terminal, where the synchronization resource is notified by the network device, a network access module of the D2D slave terminal reports a terminal type in a process of the network access, and the terminal type is the D2D slave terminal; and
the processor is further configured to instruct: after the synchronization resource of the D2D master terminal corresponding to the D2D slave terminal is received by using the transceiver, the network access module of the D2D terminal to initiate a process of releasing a link from the network device, where the synchronization resource is notified by the network device.

With reference to the eighth aspect or either of the first and second possible implementation manners of the eighth aspect, in a third possible implementation manner, the synchronization resource further includes a time-frequency resource used to transmit synchronization feedback information; and
the processor is further configured to: according to the time-frequency resource used to transmit the synchronization feedback information, by using the transceiver, send the synchronization feedback information to the D2D master terminal corresponding to the D2D slave terminal.

With reference to the third possible implementation manner of the eighth aspect, in a fourth possible implementation manner, the processor is specifically configured to: when strength of the synchronization signal that is sent by the D2D master terminal corresponding to the D2D slave terminal and received by using the transceiver exceeds a set threshold, send a power decreasing instruction to the D2D master terminal corresponding to the D2D slave terminal, where the power decreasing instruction is used to instruct the D2D master terminal to decrease transmit power of the synchronization signal; or, after synchronization with the D2D master terminal corresponding to the D2D slave terminal is completed according to the synchronization signal received by the transceiver, by using the transceiver, send a synchronization confirmation instruction to the D2D master terminal corresponding to the D2D slave terminal.

According to a ninth aspect, a network device is provided, including a transceiver and a processor, where:
the transceiver is configured to receive a measurement result of a time-frequency resource set used to transmit a synchronization signal, where the measurement result is reported by a D2D master terminal; and
the processor is configured to allocate a synchronization resource to the D2D master terminal according to the measurement result received by the transceiver, and by using the transceiver, notify, to the D2D master terminal, the synchronization resource allocated by the synchronization resource allocation module to the D2D master terminal.

With reference to the ninth aspect, in a first possible implementation manner, the processor is specifically configured to: by using the transceiver, notify, to a D2D slave terminal corresponding to the D2D master terminal, the synchronization resource allocated to the D2D master terminal.

With reference to the ninth aspect, in a second possible implementation manner, the processor is further configured to: after it is learned that the D2D slave terminal corresponding to the D2D master terminal accesses a network, by using the transceiver, instruct the D2D master terminal to send the synchronization signal.

With reference to the ninth aspect, in a third possible implementation manner, the processor is further configured to: after a message that is used to notify that the D2D slave terminal has camped on a macro cell and sent by the D2D slave terminal corresponding to the D2D master terminal is received by using the transceiver, instruct, by using the transceiver, the D2D master terminal to stop sending the synchronization signal.

With reference to the ninth aspect or any one of the first to third possible implementation manners of the ninth aspect, in a fourth possible implementation manner, the synchronization resource includes a time-frequency resource used to transmit the synchronization signal, or includes a time-frequency resource used to transmit the synchronization signal and a time-frequency resource used to transmit synchronization feedback information.

In the foregoing embodiments of the present invention, a D2D master terminal reports, to a network device, a result of measuring a time-frequency resource set used to transmit a synchronization signal, so that the network device allocates a synchronization resource to the D2D master terminal according to the measurement result. In this way, the synchronization signal is sent on the synchronization resource, so as to implement initial synchronization between D2D terminals.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

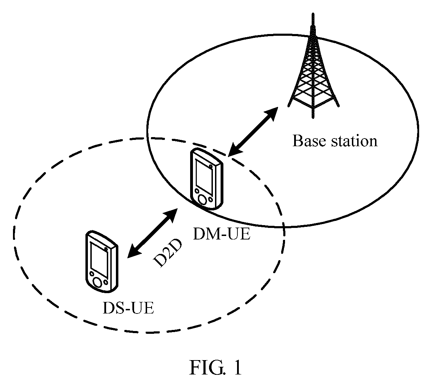

FIG. 1 is a schematic diagram of communication between a DM-UE and a DS-UE in the prior art;
FIG. 2 is a schematic diagram of a processing procedure on a DM-UE side according to an embodiment of the present invention;
FIG. 3 is a schematic diagram of a processing procedure on a DS-UE side according to an embodiment of the present invention;
FIG. 4 is a schematic diagram of a processing procedure on an eNB side according to an embodiment of the present invention;
FIG. 5 is a schematic flowchart of a specific application scenario according to an embodiment of the present invention;
FIG. 6A and FIG. 6B are schematic structural diagrams of a D2D master terminal according to an embodiment of the present invention;
FIG. 7A and FIG. 7B are schematic structural diagrams of a D2D slave terminal according to an embodiment of the present invention; and
FIG. 8A and FIG. 8B are schematic structural diagrams of a network device according to an embodiment of the present invention.

### DESCRIPTION OF EMBODIMENTS

Embodiments of the present invention provide a solution to initial synchronization between D2D terminals. This solution enables a DM-UE and a DS-UE to acquire a synchronization resource to perform synchronization between the DM-UE and the DS-UE. Further, the DM-UE may adjust transmit power of a synchronization signal according to synchronization feedback information sent by the DS-UE, so as to reduce overheads of terminals and reduce or avoid interference on other D2D pairs (namely, Twin UE).

Generally, the DM-UE is located within a network signal coverage area. For example, a UE located within the network signal coverage area may be configured as the DM-UE. In the embodiments of the present invention, the DM-UE may measure a time-frequency resource set used to transmit a synchronization signal, and report a measurement result to a network device; and the network device allocates a synchronization resource to the DM-UE according to the measurement result. The synchronization resource may include a time-frequency resource used to transmit the synchronization signal (in the embodiments of the present invention, the synchronization signal refers to a synchronization signal between the DM-UE and the DS-UE), and may further include a time-frequency resource used to transmit synchronization feedback information. The DM-UE sends the synchronization signal on a time-frequency resource that is allocated by the network device to the DM-UE and used to transmit the synchronization signal. If the network device further allocates, to the DM-UE, a time-frequency resource used to transmit synchronization feedback information, the DM-UE further receives the synchronization feedback information on the time-frequency resource used to transmit the synchronization feedback information, where the synchronization feedback information is sent by the DS-UE corresponding to the DM-UE; and may adjust transmit power of the synchronization signal according to the received synchronization feedback information.

Considering that an installation location of the DS-UE is generally outside a network signal coverage area, in the embodiments of the present invention, the DS-UE may be first placed within coverage of network signals, so that the DS-UE can acquire the synchronization resource of the DM-UE corresponding to the DS-UE from the network device. The synchronization resource may include the time-frequency resource used to transmit the synchronization signal, and may further include the time-frequency resource used to transmit the synchronization feedback information; and the DS-UE may receive, on the time-frequency resource used to transmit the synchronization signal, the synchronization signal sent by the DM-UE corresponding to the DS-UE, so as to perform synchronization with the DM-UE according to the received synchronization signal, and may further send the synchronization feedback information on the time-frequency resource used to transmit the synchronization feedback information. The DS-UE may also obtain, in a manner of signal search, the synchronization resource of the DM-UE corresponding to the DS-UE.

In the foregoing process, the network device is mainly responsible for allocating the synchronization resource to the DM-UE (which includes the time-frequency resource used to transmit the synchronization signal, and may further include the time-frequency resource used to transmit the synchronization feedback information), and notifying the allocated synchronization resource to the DM-UE and the DS-UE corresponding to the DM-UE. Further, the network device may further control a synchronization process of the DM-UE and the DS-UE, for example, instruct the DM-UE to start to send the synchronization signal and/or instruct the DM-UE to stop sending the synchronization signal.

The following describes a processing procedure on a DM-UE side, a processing procedure on a DS-UE side, and a processing procedure on a network side in detail with reference to the accompanying drawings.

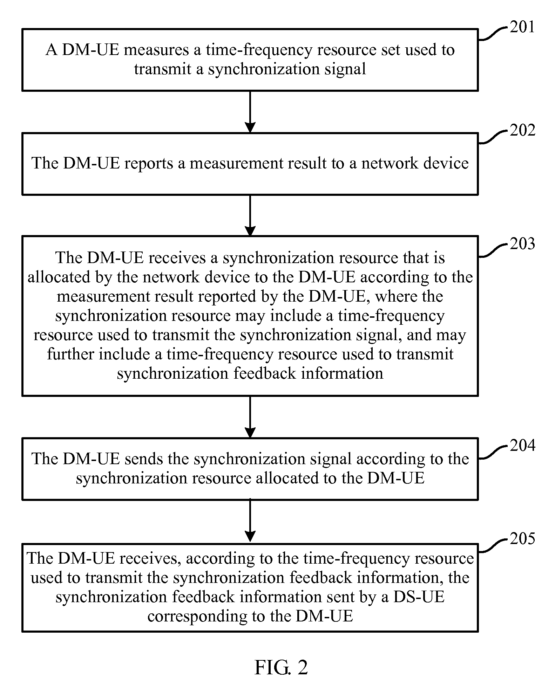

Referring to FIG. 2, FIG. 2 is a schematic diagram of a processing procedure on a DM-UE side according to an embodiment of the present invention. As shown in the figure, the procedure may include:
Step 201: A DM-UE measures a time-frequency resource set used to transmit a synchronization signal.

In specific implementation, the DM-UE may measure the time-frequency resource set in either of the following two manners:
Manner 1: The DM-UE performs measurement according to the time-frequency resource set that is preset on the DM-UE and used to transmit the synchronization signal. Specifically, a synchronization resource set may be preset on the DM-UE and includes at least the time-frequency resource set used to transmit the synchronization signal. For example, the synchronization resource set is specified in a protocol-specifying manner. A time-frequency resource in the time-frequency resource set used to transmit the synchronization signal is an uplink time-frequency resource, and the uplink time-frequency resource may include but not limited to an RB (Radio Bearer, radio bearer) resource and a symbol. Table 1 shows a form of the time-frequency resource set.

**Table 1: Synchronization resource set**

| **Resource number** | **Time-frequency resource used to transmit a synchronization signal** |
|---|---|
| 1 | The 5^{th} and 6^{th} symbols with RB=2 in the 0^{th} and 5^{th} subframes in every 5 frames |
| 2 | The x^{th} and y^{th} symbols with RB=p in the n^{th} and k^{th} subframes in every m subframes |
| ... | ... |

Further, the synchronization resource set may further include a time-frequency resource set used to transmit synchronization feedback information. A time-frequency resource in the time-frequency resource set used to transmit synchronization signal feedback information is an uplink time-frequency resource, and the uplink time-frequency resource may include but not limited to an RB resource and a symbol. A one-to-one correspondence exists between the time-frequency resource used to transmit the synchronization feedback information and the time-frequency resource used to transmit the synchronization signal. Table 2 shows a form of the time-frequency resource set.

**Table 2: Synchronization resource table**

| **Resource number** | **Time-frequency resource used to transmit a synchronization signal** | **Time-frequency resource used to transmit synchronization feedback information** |
|---|---|---|
| 1 | The 5^{th} and 6^{th} symbols with RB=2 in the 0^{th} and 5^{th} subframes in every 5 frames | The 5^{th} and 6^{th} symbols with RB=3 in the 4^{th} and 9^{th} subframes in every 5 frames |
| 2 | The x^{th} and y^{th} symbols with RB=p in the n^{th} and k^{th} subframes in every m subframes | The x'^{th} and y'^{th} symbols with RB=p' in the n'^{th} and k'^{th} subframes in every m' subframes |
| ... | ... | |

In Table 1 and Table 2, m, n, k, p, x, y, m', n', k', p', x', and y' are all illustrative, and do not represent any specified meaning.

The DM-UE receives a signal on each time-frequency resource used to transmit the synchronization signal in the synchronization resource set, so as to detect signal strength on each time-frequency resource in the time-frequency resource set.
Manner 2: The DM-UE acquires the synchronization resource set from a broadcast message sent by a network device, where the synchronization resource set includes at least the time-frequency resource set used to transmit the synchronization signal, and may further include a time-frequency resource set used to transmit synchronization feedback information. The DM-UE performs measurement according to the acquired time-frequency resource set used to transmit the synchronization signal.

Specifically, the network device may send the synchronization resource set by using the broadcast message, for example, may add an information element in the broadcast message to indicate the synchronization resource set. Content of the synchronization resource set is the same as that described above. After receiving the broadcast message, the DM-UE acquires, from the broadcast message, the time-frequency resource set used to transmit the synchronization signal, and receives a signal on each time-frequency resource in the time-frequency resource set, so as to detect signal strength on each time-frequency resource in the time-frequency resource set.

Step 202: The DM-UE reports a measurement result to a network device.

In specific implementation, the DM-UE may report the measurement result to the network device after initiating a network access process (such as a random access process) and accessing a network. The measurement result is the signal strength, detected by the DM-UE, on each time-frequency resource in the time-frequency resource set used to transmit the synchronization signal.

Further, in an access reason carried in a sent random access request message, the DM-UE may indicate that the access reason is measurement result reporting, and when reporting terminal capability information, may further indicate a type of the DM-UE, namely, indicate that the DM-UE is a D2D master terminal.

Step 203: The DM-UE receives a synchronization resource that is allocated by the network device to the DM-UE according to the measurement result reported by the DM-UE, where the synchronization resource may include a time-frequency resource used to transmit the synchronization signal, and may further include a time-frequency resource used to transmit synchronization feedback information.

In specific implementation, in a case in which the network device allocates, to the DM-UE, only the time-frequency resource used to transmit the synchronization signal, the network device may select, according to the signal strength, reported by the DM-UE, on each time-frequency resource in the time-frequency resource set, a time-frequency resource with relatively low signal strength as the time-frequency resource used for the DM-UE to transmit the synchronization signal, and notify, to the DM-UE, the time-frequency resource allocated to the DM-UE and used to transmit the synchronization signal.

In a case in which the network device allocates, to the DM-UE, the time-frequency resource used to transmit the synchronization signal and the time-frequency resource used to transmit the synchronization feedback information, the synchronization resource set shown in Table 2 may be preset on the network device. According to the signal strength, reported by the DM-UE, on each time-frequency resource in the time-frequency resource set, the network device may select the "time-frequency resource with minimum signal strength and used to transmit the synchronization signal", obtain the corresponding "time-frequency resource used to transmit the synchronization feedback information" by searching Table 2, and allocate, to the DM-UE, the "time-frequency resource used to transmit the synchronization signal" and the "time-frequency resource used to transmit the synchronization feedback information".

When notifying the allocated synchronization resource to the DM-UE, the network device may send a parameter of the synchronization resource to the DM-UE, or may send only a resource number of the synchronization resource to the DM-UE, so as to reduce a network overhead. After receiving the resource number, the DM-UE may obtain a corresponding synchronization resource by searching a synchronization resource set that is preset locally.

Optionally, when selecting the "time-frequency resource used to transmit the synchronization signal" according to the signal strength, reported by the DM-UE, on each time-frequency resource in the time-frequency resource set, the network device may select a time-frequency resource with minimum signal strength, so as to maximally reduce or avoid interference on other Twin UEs caused by the synchronization signal sent by the DM-UE.

Steps 204 to 205: The DM-UE sends the synchronization signal according to the synchronization resource allocated to the DM-UE. Further, in a case in which the synchronization resource further includes the time-frequency resource used to transmit the synchronization feedback information, according to the time-frequency resource used to transmit the synchronization feedback information, the DM-UE receives the synchronization feedback information sent by a DS-UE corresponding to the DM-UE.

In specific implementation, the DM-UE may send the synchronization signal on the synchronization resource immediately after receiving the synchronization resource allocated by the network device to the DM-UE, and may further receive the synchronization feedback information according to the synchronization resource (in a case in which the time-frequency resource used to transmit the synchronization feedback information is allocated to the DM-UE); or the DM-UE may send the synchronization signal according to the synchronization resource after receiving a synchronization instruction sent by the network device, and may further receive the synchronization feedback information according to the synchronization resource (in a case in which the time-frequency resource used to transmit the synchronization feedback information is allocated to the DM-UE).

The synchronization feedback information may be synchronization confirmation information, or may be power adjustment instruction information. If the DM-UE receives the synchronization confirmation information, the DM-UE may confirm, according to the synchronization confirmation information, completion of synchronizing with the DS-UE that sends the synchronization confirmation information, and may further stop sending the synchronization signal; or if the DM-UE receives the power adjustment instruction information, the DM-UE adjusts transmit power of the synchronization signal.

Preferably, before the DM-UE receives any power adjustment instruction information, the DM-UE sends the synchronization signal at maximum fixed power, and then reduces the transmit power of the synchronization signal after receiving power decreasing instruction information. Further, the DM-UE increases the transmit power of the synchronization signal if receiving power increasing instruction information.

Further, considering that one DM-UE may correspond to multiple DS-UEs, in this case, the DM-UE decreases the transmit power of the synchronization signal only after receiving power adjustment instructions (such as power decreasing instructions) sent by all the DS-UEs corresponding to the DM-UE; and stops sending the synchronization signal after receiving synchronization confirmation instructions sent by all the DS-UEs corresponding to the DM-UE.

Further, to improve security, on a basis of the foregoing process, the DM-UE may be authenticated by using a core network device in a random access process of the DM-UE. Correspondingly, after the authentication succeeds, the core network device notifies the network device (such as a base station) that the authentication succeeds. After learning that the authentication performed on the DM-UE succeeds, the network device allocates the synchronization resource to the DM-UE, and notifies, to the DM-UE, the synchronization resource allocated to the DM-UE.

From the foregoing description, it can be seen that a DM-UE reports, to a network device, a result of measuring a time-frequency resource set used to transmit a synchronization signal, so that the network device allocates a synchronization resource to the DM-UE according to the measurement result. In this way, the synchronization signal is sent on the synchronization resource, so as to implement initial synchronization between D2D terminals.

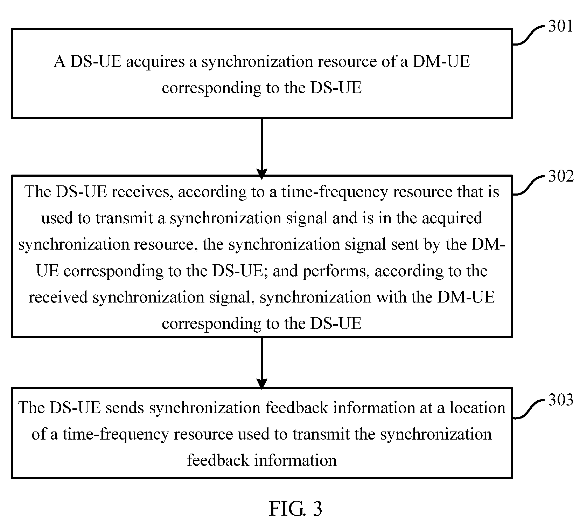

Referring to FIG. 3, FIG. 3 is a schematic diagram of a processing procedure on a DS-UE side according to an embodiment of the present invention. As shown in the figure, the procedure may include:
Step 301: A DS-UE acquires a synchronization resource of a DM-UE corresponding to the DS-UE.

In specific implementation, the DS-UE may acquire the synchronization resource of the DM-UE corresponding to the DS-UE in either of the following two manners:
Manner 1: The DS-UE determines, in a manner of signal search in a time-frequency resource set that is preset and used to transmit a synchronization signal, the synchronization resource of the DM-UE corresponding to the DS-UE.
   Generally, the DM-UE may send a broadcast message, where the message includes an ID of the DM-UE, and the ID of the DM-UE corresponding to the DS-UE is preset on the DS-UE (generally preset before delivery from the factory). In this embodiment of the present invention, a synchronization resource set is further preset on the DS-UE and includes at least the time-frequency resource set used to transmit the synchronization signal. Content of the time-frequency resource set is the same as that described above. Further, the synchronization resource set further includes a time-frequency resource set used to transmit synchronization feedback information. A one-to-one correspondence exists between a "time-frequency resource used to transmit the synchronization feedback information" and a "time-frequency resource used to transmit the synchronization signal". Content of the synchronization resource set is the same as that described above.
   The DS-UE performs signal search according to the time-frequency resource set that is preset on the DS-UE and used to transmit the synchronization signal, and when a terminal identifier carried in a signal that is obtained by means of search is an identifier of the DM-UE corresponding to the DS-UE, determines a time-frequency resource used by the signal that is currently obtained by means of search as the time-frequency resource used by the DM-UE corresponding to the DS-UE to transmit the synchronization signal. Further, the corresponding "time-frequency resource used to transmit the synchronization feedback information" may be further obtained by means of search according to the determined "time-frequency resource used by the DM-UE to transmit the synchronization signal".
Manner 2: The DS-UE receives the time-frequency resource that is notified by a network device and used by the DM-UE corresponding to the DS-UE to transmit the synchronization signal.

In specific implementation, the network device keeps a record after allocating the synchronization resource to the DM-UE in the manner in step 203 shown in FIG. 2. When learning that the DS-UE corresponding to the DM-UE accesses a network, the network device notifies, to the DS-UE that accesses the network, the synchronization resource allocated to the DM-UE.

Step 302: The DS-UE receives, according to a time-frequency resource that is used to transmit a synchronization signal and is in the acquired synchronization resource, the synchronization signal sent by the DM-UE corresponding to the DS-UE; and performs, according to the received synchronization signal, synchronization with the DM-UE corresponding to the DS-UE.

Step 303: Further, when the synchronization resource further includes a time-frequency resource used to transmit synchronization feedback information, the DS-UE further sends the synchronization feedback information at a location of the time-frequency resource used to transmit the synchronization feedback information.

In specific implementation, if strength of the synchronization signal that is sent by the DM-UE corresponding to the DS-UE exceeds a set threshold, the DS-UE sends a power adjustment instruction to the DM-UE, so that the DM-UE adjusts transmit power of the synchronization signal according to the instruction; or if strength of the synchronization signal that is sent by the DM-UE corresponding to the DS-UE does not exceed a set threshold, the DS-UE sends a synchronization confirmation instruction to the DM-UE after success of synchronization, so that the DM-UE stops sending the synchronization signal.

From the foregoing description, it can be seen that a DS-UE acquires a synchronization resource of a DM-UE corresponding to the DS-UE, and receives, according to the synchronization resource, a synchronization signal sent by the DM-UE, so as to implement initial synchronization between D2D terminals.

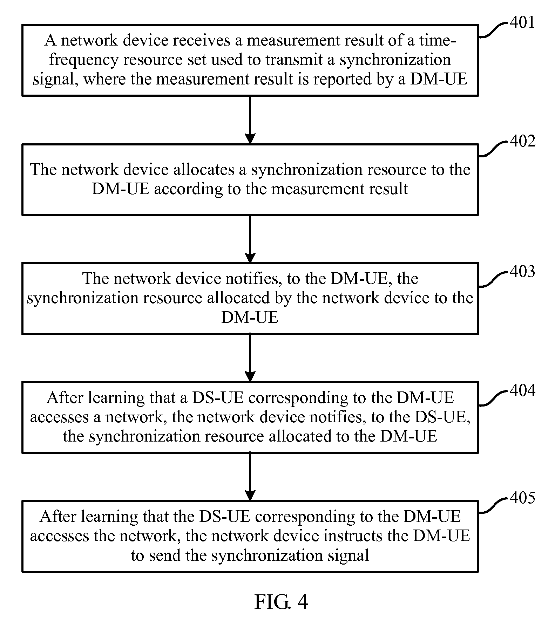

Referring to FIG. 4, FIG. 4 is a schematic diagram of a processing procedure on a network side according to an embodiment of the present invention. As shown in the figure, the procedure may include:
Step 401: A network device receives a measurement result of a time-frequency resource set used to transmit a synchronization signal, where the measurement result is reported by a DM-UE. Specific implementation of measuring, by the DM-UE, according to the synchronization resource set and reporting the measurement result is the same as that described above, and is not detailed herein again.
Step 402: The network device allocates a synchronization resource to the DM-UE according to the measurement result. Being the same as that described above, the synchronization resource allocated by the network device to the DM-UE may include a time-frequency resource used to transmit the synchronization signal, and may further include a time-frequency resource used to transmit synchronization feedback information. A specific implementation manner is the same as that described above, and is not detailed herein again.
Step 403: The network device notifies, to the DM-UE, the synchronization resource allocated to the DM-UE. A specific implementation manner is the same as that described above, and is not detailed herein again.

Further, the procedure may further include the following step:
Step 404: After learning that a DS-UE corresponding to the DM-UE accesses a network, the network device notifies, to the DS-UE, the synchronization resource allocated to the DM-UE.

Further, the procedure may further include the following step:
Step 405: After learning that the DS-UE corresponding to the DM-UE accesses the network, the network device instructs the DM-UE to send the synchronization signal.

There is no strict requirement for a time sequence between step 404 and step 405 in the foregoing.

Further, after receiving a message that is used to notify that the DS-UE has camped on a macro cell and sent by the DS-UE corresponding to the DM-UE, the network device instructs the DM-UE to stop sending the synchronization signal.

From the foregoing description, it can be seen that a network device allocates a synchronization resource to a DM-UE according to a result, reported by the DM-UE, of measuring a time-frequency resource set used to transmit a synchronization signal, and notifies the allocated synchronization resource to the DM-UE, and may further notify the allocated synchronization resource to a DS-UE corresponding to the DM-UE, so that the DM-UE sends the synchronization signal according to the synchronization resource and the DS-UE receives the synchronization signal according to the synchronization resource, so as to implement initial synchronization between D2D terminals. Further, the DS-UE may further send synchronization feedback information according to a time-frequency resource that is used to transmit the synchronization feedback information and is in the synchronization resource; and the DM-UE receives the synchronization feedback information according to the time-frequency resource that is used to transmit the synchronization feedback information and is in the synchronization resource, and then adjusts transmit power of the synchronization signal according to the synchronization feedback information, so as to reduce power consumption of a terminal and reduce or avoid interference on other D2D pairs (namely, Twin UE).

The network device in the foregoing flow may be a base station.

For ease of understanding of the embodiments of the present invention, a specific application scenario is used as an example for description in the following.

In the specific scenario, information about a mapping relationship between IDs of a DM-UE and a DS-UE is pre-stored on the DM-UE and the DS-UE (which may be configured before delivery from the factory). An operator further stores the information about the mapping relationship on a function entity on a core network side, where the function entity on the core network side may be an MME (Mobility Management Entity, mobility management entity), or may be a newly disposed function entity in the embodiments of the present invention, such as a Twin-UE Server (related user server).

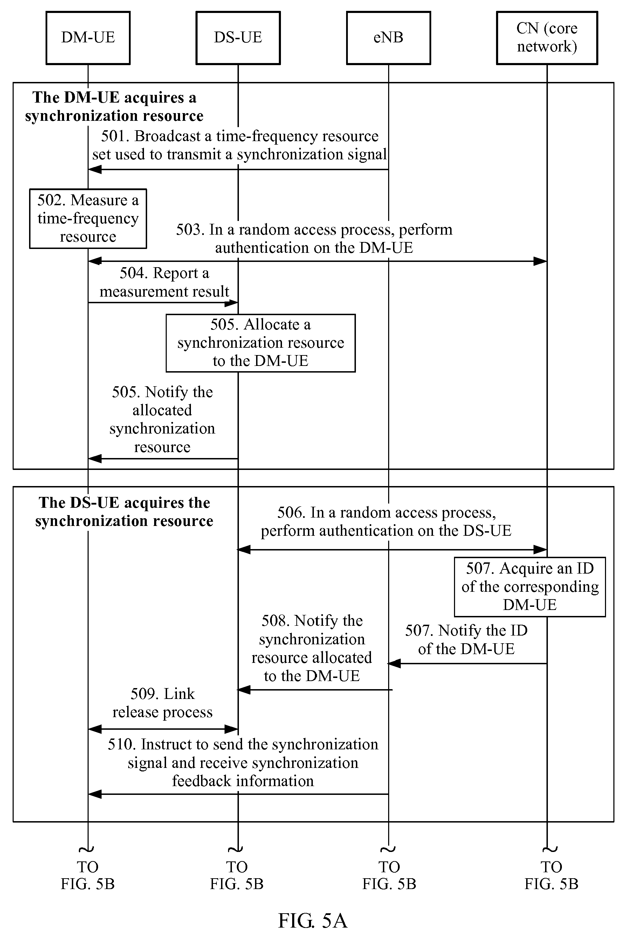

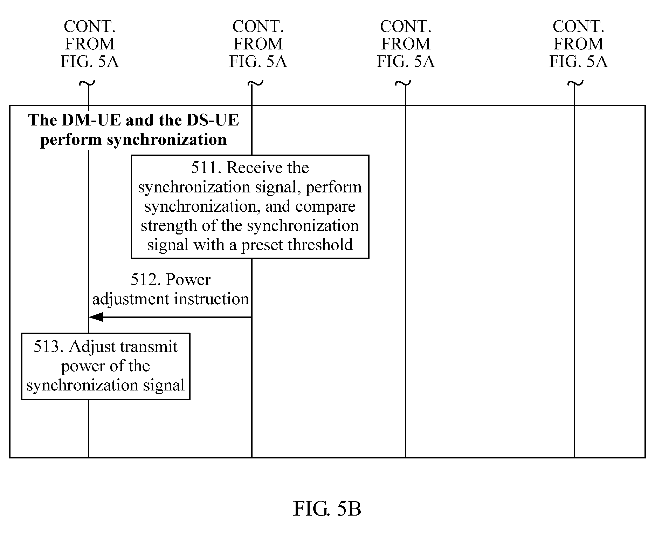

Referring to FIG. 5, FIG. 5 is a schematic flowchart of initial synchronization between D2D terminals in a specific application scenario.

First, a DM-UE and a DS-UE corresponding to the DM-UE (hereinafter referred to as DS-UE) are placed in a location within network coverage indoors. In step 501, a network broadcasts a time-frequency resource set used to transmit a synchronization signal. In step 502, the DM-UE measures the broadcast time-frequency resource set, and obtains signal strength on each time-frequency resource in the time-frequency resource set.

Then, in step 503, the DM-UE initiates a random access process. In this process, an access request reason indicated by the DM-UE is reporting of a result of measuring the time-frequency resource set used to transmit the synchronization signal, and when reporting a UE capability, the DM-UE indicates a type of the DM-UE. A core network device performs network authentication on the DM-UE. After the authentication succeeds, the DM-UE accesses a network. In step 504, after accessing the network, the DM-UE reports the signal strength on each time-frequency resource in the time-frequency resource set used to transmit the synchronization signal. In step 505, a base station allocates a synchronization resource to the DM-UE according to the reported measurement result, where the synchronization resource includes a time-frequency resource used to transmit the synchronization signal and a time-frequency resource used to transmit synchronization feedback information.

Still then, in step 506, the DS-UE initiates a random access process to access the network, and when reporting a UE capability, indicates a type of the DS-UE. The core network device performs authentication on the DS-UE. After the authentication succeeds, in step 507, the core network device finds, according to information that is about a mapping relationship between IDs of the DM-UE and the DS-UE and is stored by the core network device, the DM-UE corresponding to the DS-UE, and notifies the ID of the found DM-UE to the base station. In step 508, the base station notifies the synchronization resource of the DM-UE to the DS-UE. In subsequent step 509, the DS-UE initiates a process of releasing a link from the base station. Further, if the DM-UE corresponding to the DS-UE is not found, the core network device notifies the DS-UE that the DM-UE corresponding to the DS-UE is not found, and the DS-UE initiates, according to the notification, the process of releasing the link from the base station.

In step 510, after discovering that the DS-UE accesses the network, the base station instructs, in a manner of signaling, the DM-UE to send the synchronization signal at a location of the allocated time-frequency resource used to transmit the synchronization signal, and receive the synchronization feedback information on the time-frequency resource used to receive the synchronization feedback information.

Subsequently, the DS-UE is placed in an actual installation location (there is no requirement about whether the DS-UE is within network coverage). The DS-UE attempts to search for a macro network first, and accesses the macro network if the DS-UE can camp on the macro network, and notifies a network side (such as the core network device and/or the base station) that the DS-UE camps on the macro network (for example, the notification is made in a manner of signaling, where content of a signaling message may be expressed as "the DS-UE has camped on the macro network"). In a case in which one DM-UE corresponds to one DS-UE, after receiving the instruction, the network side instructs the DM-UE not to send the synchronization signal again or not to detect a synchronization feedback signal again (for example, the instruction is made in a manner of signaling, where content of a signaling message may be expressed as "the DM-UE stops sending the synchronization signal and detecting the synchronization feedback information"). If one DM-UE needs to support multiple DS-UEs, only after receiving macro network camp-on notifications that are sent by all the DS-UEs corresponding to the DM-UE to the network, the network side instructs the DM-UE not to send the synchronization signal again or not to detect the synchronization feedback signal again.

In step 511, after a time period (a length of the time period may be broadcast in a system broadcast message, defined in a standard, or defined by each manufacturer) during which no macro network is obtained by means of search, the DS-UE starts to receive the synchronization signal of the DM-UE according to the obtained synchronization resource (the time-frequency resource used to transmit the synchronization signal), and synchronizes with the DM-UE according to the received synchronization signal. The DS-UE compares strength of the received synchronization signal with a preset threshold. If the strength of the synchronization signal is not higher than the threshold, synchronization confirmation information is fed back on the corresponding time-frequency resource according to the obtained synchronization resource (the time-frequency resource used to transmit the synchronization feedback information); or if the strength of the synchronization signal is higher than the threshold, an adjustment instruction of decreasing transmit power of the synchronization signal is sent in step 512 (where the adjustment instruction may be a relative value or may be an absolute value). After the DS-UE is synchronized with the DM-UE successfully, the DS-UE sends synchronization confirmation information.

In step 513, after receiving the adjustment instruction of decreasing the transmit power of the synchronization signal, the DM-UE decreases the transmit power of the synchronization signal. After the DM-UE receives the synchronization confirmation information, the initial synchronization is ended, and the DM-UE stops sending the synchronization signal.

Based on the same technical conception, the embodiments of the present invention further provide a D2D terminal device and a network device. Principles of resolving a problem by such devices are similar to the method process described in the foregoing embodiments. Therefore, for implementation of such devices, reference may be made to the implementation of the method, and a duplicate part is not described herein again.

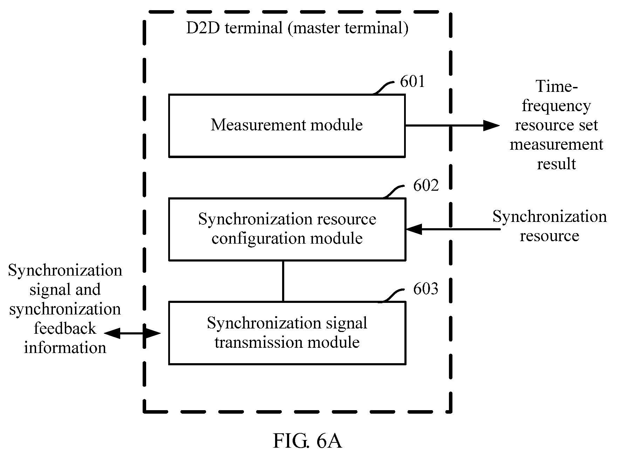

Referring to FIG. 6A, FIG. 6A is a schematic structural diagram of logical functions of a D2D terminal according to an embodiment of the present invention. The D2D terminal is a D2D master terminal (DM-UE). As shown in FIG. 6A, the D2D terminal may include: a measurement module 601, a synchronization resource configuration module 602, and a synchronization signal transmission module 603. The D2D terminal further includes a network access module (not shown in the figure). Main functions of the foregoing functional modules of the D2D terminal may include:
the measurement module 601 is configured to measure a time-frequency resource set used to transmit a synchronization signal, and report a measurement result of the measurement module to a network device;
the synchronization resource configuration module 602 is configured to receive a synchronization resource that is allocated by the network device to the D2D master terminal according to the measurement result measured and reported by the measurement module 601; and
the synchronization signal transmission module 603 is configured to send the synchronization signal according to the synchronization resource that is allocated to the D2D master terminal and received by the synchronization resource configuration module 602.

In a possible implementation manner, the measurement module 601 may perform measurement according to the time-frequency resource set that is preset on the D2D master terminal and used to transmit the synchronization signal; or acquire, from a broadcast message sent by the network device, the time-frequency resource set used to transmit the synchronization signal, and perform measurement according to the acquired time-frequency resource set.

In a possible implementation manner, the measurement module 601 may report the measurement result to the network device after network access is initiated and a network is accessed, where the network access module of the D2D terminal reports an access reason and a terminal type in a process of the network access, the access reason is measurement reporting, and the terminal type is the D2D master terminal.

In a possible implementation manner, the synchronization resource includes a time-frequency resource used to transmit the synchronization signal; and correspondingly, the synchronization signal transmission module 603 may send, after the synchronization resource configuration module 602 receives a time-frequency resource allocated by the network device to the D2D master terminal and used to transmit the synchronization signal, the synchronization signal immediately at a location of the allocated time-frequency resource used to transmit the synchronization signal; or send, after a time-frequency resource that is allocated by the network device to the D2D master terminal and used to transmit the synchronization signal is received and when a synchronization instruction sent by the network device is received, the synchronization signal at a location of the allocated time-frequency resource used to transmit the synchronization signal, where the synchronization instruction is sent by the network device when the network device learns that a D2D slave terminal corresponding to the D2D terminal accesses the network.

In a possible implementation manner, the synchronization resource further includes a time-frequency resource used to transmit synchronization feedback information; and correspondingly, the synchronization signal transmission module 603 may receive, according to the time-frequency resource used to transmit the synchronization feedback information, the synchronization feedback information sent by the D2D slave terminal corresponding to the D2D master terminal, and decrease transmit power of the synchronization signal when the received synchronization feedback information is a power decreasing instruction.

In a possible implementation manner, the synchronization signal transmission module 603 may decrease, in a case in which a quantity of D2D slave terminals corresponding to the D2D master terminal is at least 2, the transmit power of the synchronization signal after power decreasing instructions sent by all the D2D slave terminals corresponding to the D2D master terminal are received.

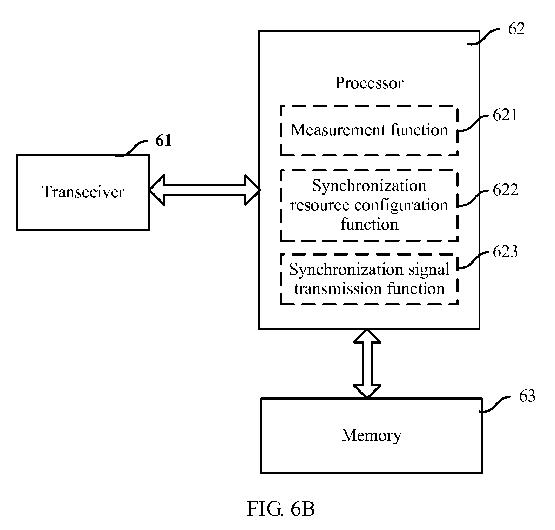

Referring to FIG. 6B, FIG. 6B is a schematic structural diagram of hardware of a D2D terminal configured as a D2D master terminal (DM-UE) according to an embodiment of the present invention. As shown in the figure, the D2D terminal may include a transceiver 61 and a processor 62, and may further include a memory 63. The processor 62 has a measurement function 621, a synchronization resource configuration function 622, and a synchronization signal transmission function 623. For specific implementation processes of the foregoing functions, reference may be made to corresponding functional modules shown in FIG. 6A. Specifically, in components of the D2D master terminal:
the processor 62 is configured to: by using the transceiver 61, measure a time-frequency resource set used to transmit a synchronization signal, and report a measurement result of the measurement module to a network device; by using the transceiver 61, receive a synchronization resource that is allocated by the network device to the D2D master terminal according to the measurement result; and by using the transceiver 61, send the synchronization signal according to the synchronization resource allocated to the D2D master terminal.

In a possible implementation manner, the processor 62 may perform, by using the transceiver 61, measurement according to the time-frequency resource set that is preset on the D2D master terminal and used to transmit the synchronization signal; or by using the transceiver 61, acquire, from a broadcast message sent by the network device, the time-frequency resource set used to transmit the synchronization signal, and by using the transceiver 61, perform measurement according to the acquired time-frequency resource set.

In a possible implementation manner, the processor 62 may report, by using the transceiver 61, the measurement result to the network device after network access is initiated and a network is accessed, where a network access module of the D2D terminal reports an access reason and a terminal type in a process of the network access, the access reason is measurement reporting, and the terminal type is the D2D master terminal.

In a possible implementation manner, the synchronization resource includes a time-frequency resource used to transmit the synchronization signal; and correspondingly, the processor 62 may, after the transceiver 61 receives a time-frequency resource that is allocated by the network device to the D2D master terminal and used to transmit the synchronization signal, by using the transceiver 61, send the synchronization signal immediately at a location of the allocated time-frequency resource used to transmit the synchronization signal; or after a time-frequency resource that is allocated by the network device to the D2D master terminal and used to transmit the synchronization signal is received by using the transceiver 61 and when a synchronization instruction sent by the network device is received by using the transceiver 61, send, by using the transceiver 61, the synchronization signal at a location of the allocated time-frequency resource used to transmit the synchronization signal, where the synchronization instruction is sent by the network device when the network device learns that a D2D slave terminal corresponding to the D2D terminal accesses the network.

In a possible implementation manner, the synchronization resource further includes a time-frequency resource used to transmit synchronization feedback information; and correspondingly, the processor 61 may further, according to the time-frequency resource used to transmit the synchronization feedback information, by using the transceiver 61, receive the synchronization feedback information sent by the D2D slave terminal corresponding to the D2D master terminal, and decrease transmit power of the synchronization signal of the transceiver 61 when the received synchronization feedback information is a power decreasing instruction.

In a possible implementation manner, the processor 62 may decrease, in a case in which a quantity of D2D slave terminals corresponding to the D2D master terminal is at least 2, the transmit power of the synchronization signal of the transceiver 61 after power decreasing instructions sent by all the D2D slave terminals corresponding to the D2D master terminal are received by using the transceiver 61.

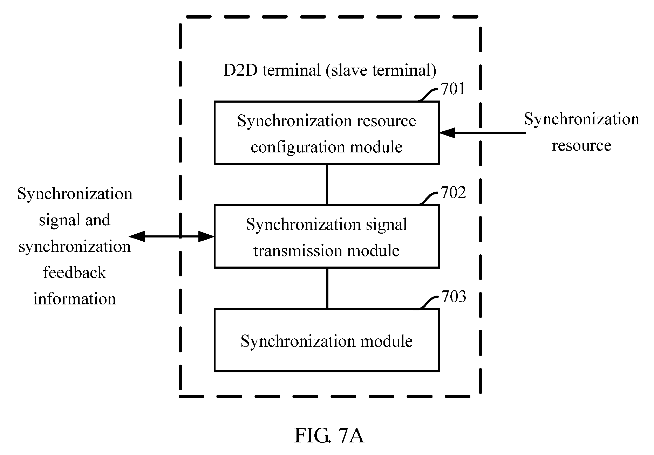

Referring to FIG. 7A, FIG. 7A is a schematic structural diagram of a D2D terminal according to another embodiment of the present invention. The D2D terminal is a D2D slave terminal (DS-UE). As shown in FIG. 7A, the D2D terminal may include: main functions of the foregoing functional modules of the D2D terminal may include: a synchronization resource configuration module 701, and a synchronization signal transmission module 702, and a synchronization module 703. The D2D terminal further includes a network access module (not shown in the figure). The main functions of the functional modules of the D2D terminal may include:
the synchronization resource configuration module 701 is configured to acquire a synchronization resource of a D2D master terminal corresponding to the D2D slave terminal, where the synchronization resource includes a time-frequency resource used to transmit a synchronization signal;
the synchronization signal transmission module 702 is configured to receive, according to the time-frequency resource that is used to transmit the synchronization signal and is in the synchronization resource acquired by the synchronization resource configuration module 701, the synchronization signal sent by the D2D master terminal corresponding to the D2D slave terminal; and
the synchronization module 703 is configured to perform, according to the received synchronization signal, synchronization with the D2D master terminal corresponding to the D2D slave terminal.

In a possible implementation manner, the synchronization resource configuration module 701 may perform signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determine a time-frequency resource used by the signal that is currently obtained by means of search as the time-frequency resource used by the D2D master terminal corresponding to the D2D slave terminal to transmit the synchronization signal; or receive the synchronization resource of the D2D master terminal corresponding to the D2D slave terminal, where the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

In a possible implementation manner, the synchronization resource configuration module 701 may receive, after the D2D slave terminal initiates network access and accesses a network, the synchronization resource of the D2D master terminal corresponding to the D2D slave terminal, where the synchronization resource is notified by the network device, the network access module of the D2D slave terminal reports a terminal type in a process of the network access, and the terminal type is the D2D slave terminal; and the synchronization resource configuration module 701 may further instruct, after the synchronization resource of the D2D master terminal corresponding to the D2D slave terminal is received, the network access module of the D2D terminal to initiate a process of releasing a link from the network device, where the synchronization resource is notified by the network device.

In a possible implementation manner, the synchronization resource further includes a time-frequency resource used to transmit synchronization feedback information; and correspondingly, the synchronization signal transmission module 702 may further send, according to the time-frequency resource used to transmit the synchronization feedback information, the synchronization feedback information to the D2D master terminal corresponding to the D2D slave terminal.

In a possible implementation manner, the synchronization signal transmission module 702 may, when strength of the received synchronization signal sent by the D2D master terminal corresponding to the D2D slave terminal exceeds a set threshold, send a power decreasing instruction to the D2D master terminal corresponding to the D2D slave terminal, where the power decreasing instruction is used to instruct the D2D master terminal to decrease transmit power of the synchronization signal; or after synchronization with the D2D master terminal corresponding to the D2D slave terminal is completed according to the received synchronization signal, send a synchronization confirmation instruction to the D2D master terminal corresponding to the D2D slave terminal.

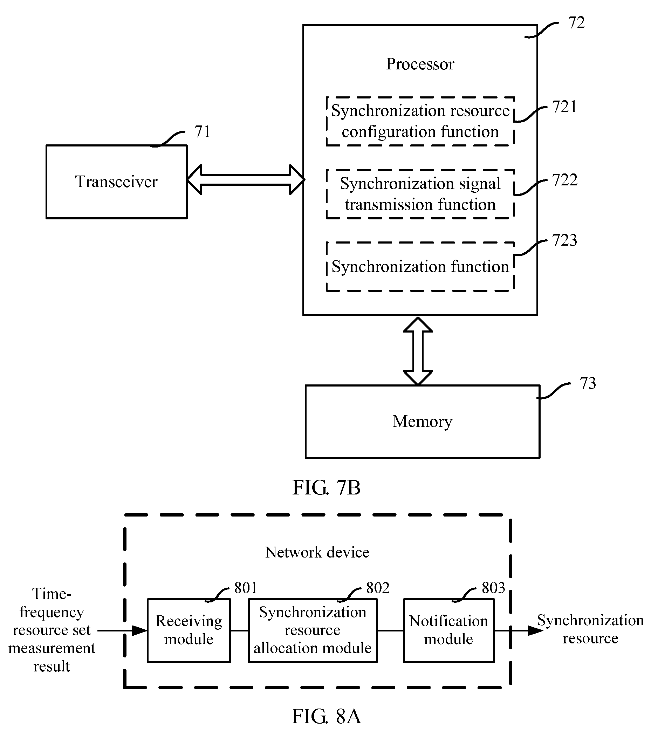

Referring to FIG. 7B, FIG. 7B is a schematic structural diagram of hardware of a D2D terminal configured as a D2D slave terminal (DS-UE) according to an embodiment of the present invention. As shown in the figure, the D2D terminal may include a transceiver 71 and a processor 72, and may further include a memory 73. The processor 72 may implement a synchronization resource configuration function 721, and a synchronization signal transmission function 722, and a synchronization function 723. In components of the D2D terminal:
the processor 72 is configured to: by using the transceiver 71, acquire a synchronization resource of a D2D master terminal corresponding to the D2D slave terminal, where the synchronization resource includes a time-frequency resource used to transmit a synchronization signal; according to the time-frequency resource that is used to transmit the synchronization signal and is in the acquired synchronization resource, by using the transceiver 71, receive the synchronization signal sent by the D2D master terminal corresponding to the D2D slave terminal; and according to the received synchronization signal, by using the transceiver 71, perform synchronization with the D2D master terminal corresponding to the D2D slave terminal.

In a possible implementation manner, the processor 72 may, by using the transceiver 71, perform signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determine a time-frequency resource used by the signal that is currently obtained by means of search as the time-frequency resource used by the D2D master terminal corresponding to the D2D slave terminal to transmit the synchronization signal; or, by using the transceiver 71, receive the synchronization resource of the D2D master terminal corresponding to the D2D slave terminal, where the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

In a possible implementation manner, the processor 72 may, after the D2D slave terminal initiates network access and accesses a network, by using the transceiver 71, receive the synchronization resource of the D2D master terminal corresponding to the D2D slave terminal, where the synchronization resource is notified by the network device, a network access module of the D2D slave terminal reports a terminal type in a process of the network access, and the terminal type is the D2D slave terminal. The processor 72 may further instruct, after the synchronization resource of the D2D master terminal corresponding to the D2D slave terminal is received by using the transceiver 71, the network access module of the D2D terminal to initiate a process of releasing a link from the network device, where the synchronization resource is notified by the network device.

In a possible implementation manner, the synchronization resource further includes a time-frequency resource used to transmit synchronization feedback information; and correspondingly, the processor 72 may, according to the time-frequency resource used to transmit the synchronization feedback information, by using the transceiver 71, send the synchronization feedback information to the D2D master terminal corresponding to the D2D slave terminal.

In a possible implementation manner, the processor 72 may, when strength of the synchronization signal that is sent by the D2D master terminal corresponding to the D2D slave terminal and received by using the transceiver 71 exceeds a set threshold, send a power decreasing instruction to the D2D master terminal corresponding to the D2D slave terminal, where the power decreasing instruction is used to instruct the D2D master terminal to decrease transmit power of the synchronization signal; or, after synchronization with the D2D master terminal corresponding to the D2D slave terminal is completed according to the synchronization signal received by the transceiver, by using the transceiver 71, send a synchronization confirmation instruction to the D2D master terminal corresponding to the D2D slave terminal.

Referring to FIG. 8A, FIG. 8A is a schematic structural diagram of a network device according to an embodiment of the present invention. In an LTE system, the network device may be an eNB in the foregoing embodiment. For another wireless communications system, the network device may be a network access device for implementing a function similar to that of the eNB. As shown in FIG. 8A, the network device may include a receiving module 801, a synchronization resource allocation module 803, and a notification module 803. Main functions of the foregoing functional modules of the network device may include:
the receiving module 801 is configured to receive a measurement result of a time-frequency resource set used to transmit a synchronization signal, where the measurement result is reported by a D2D master terminal;
the synchronization resource allocation module 802 is configured to allocate a synchronization resource to the D2D master terminal according to the measurement result received by the receiving module; and
the notification module 803 is configured to notify, to the D2D master terminal, the synchronization resource allocated by the synchronization resource allocation module to the D2D master terminal.

In a possible implementation manner, the notification module 803 may further notify, to a D2D slave terminal corresponding to the D2D master terminal, the synchronization resource allocated to the D2D master terminal.

In a possible implementation manner, the notification module 803 may further instruct, after it is learned that the D2D slave terminal corresponding to the D2D master terminal accesses a network, the D2D master terminal to send the synchronization signal.

In a possible implementation manner, the notification module 803 may further instruct, after a message that is used to notify that the D2D slave terminal has camped on a macro cell and sent by the D2D slave terminal corresponding to the D2D master terminal is received, the D2D master terminal to stop sending the synchronization signal.

In a possible implementation manner, the synchronization resource includes a time-frequency resource used to transmit the synchronization signal, or includes a time-frequency resource used to transmit the synchronization signal and a time-frequency resource used to transmit synchronization feedback information. In the foregoing embodiment of the present invention, a D2D master terminal reports, to a network device, a result of measuring a time-frequency resource set used to transmit a synchronization signal, so that the network device allocates a synchronization resource to the D2D master terminal according to the measurement result. In this way, the synchronization signal is sent on the synchronization resource, so as to implement initial synchronization between D2D terminals.

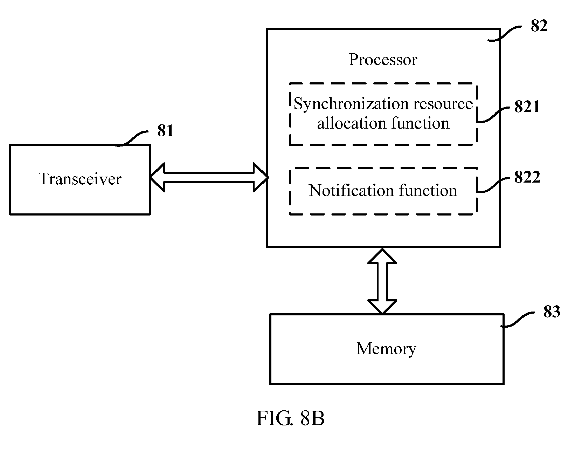

Referring to FIG. 8B, FIG. 8B is a schematic structural diagram of hardware of a network device according to an embodiment of the present invention. In an LTE system, the network device may be an eNB in the foregoing embodiment. For another wireless communications system, the network device may be a network access device for implementing a function similar to that of the eNB. The network device may include a transceiver 81, a processor 82, and may further include a memory 83. Further, the processor 82 may implement a synchronization resource allocation function 821 and a notification function 822. In components of the network device:
the transceiver 81 is configured to receive a measurement result of a time-frequency resource set used to transmit a synchronization signal, where the measurement result is reported by a D2D master terminal; and
the processor 82 is configured to: allocate a synchronization resource to the D2D master terminal according to the measurement result received by the transceiver 81, and by using the transceiver 81, notify, to the D2D master terminal, the synchronization resource allocated by the synchronization resource allocation module to the D2D master terminal.

In a possible implementation manner, the processor 82 may, by using the transceiver 81, notify, to a D2D slave terminal corresponding to the D2D master terminal, the synchronization resource allocated to the D2D master terminal.

In a possible implementation manner, the processor 81 may further, after it is learned that the D2D slave terminal corresponding to the D2D master terminal accesses a network, by using the transceiver 81, instruct the D2D master terminal to send the synchronization signal.

In a possible implementation manner, the processor 82 may further, after a message that is used to notify that the D2D slave terminal has camped on a macro cell and sent by the D2D slave terminal corresponding to the D2D master terminal is received by using the transceiver 81, by using the transceiver 81, instruct the D2D master terminal to stop sending the synchronization signal.

In a possible implementation manner, the synchronization resource includes a time-frequency resource used to transmit the synchronization signal, or includes a time-frequency resource used to transmit the synchronization signal and a time-frequency resource used to transmit synchronization feedback information.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the procedurecharts and/or block diagrams of the method, the device (system), and the computer program product according to the embodiments of the present invention. It should be understood that computer program instructions may be used to implement each process and/or each block in the procedurecharts and/or the block diagrams and a combination of a process and/or a block in the procedurecharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the procedurecharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the procedurecharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the procedurecharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A method for initial synchronization between device-to-device D2D terminals, wherein the method comprises:
measuring, by a D2D master terminal, a time-frequency resource set used to transmit a synchronization signal, and reporting a measurement result to a network device;
receiving, by the D2D master terminal, a synchronization resource that is allocated by the network device to the D2D master terminal according to the measurement result reported by the D2D master terminal; and
sending, by the D2D master terminal, the synchronization signal according to the synchronization resource allocated to the D2D master terminal.

2. The method according to claim 1, wherein the measuring, by a D2D master terminal, a time-frequency resource set used to transmit a synchronization signal comprises:
performing, by the D2D master terminal, measurement according to the time-frequency resource set that is preset on the D2D master terminal and used to transmit the synchronization signal; or
acquiring, by the D2D master terminal from a broadcast message sent by the network device, the time-frequency resource set used to transmit the synchronization signal, and performing measurement according to the acquired time-frequency resource set.

3. The method according to claim 1, wherein the D2D master terminal reports the measurement result to the network device after initiating network access and accessing a network; and the D2D master terminal reports an access reason and a terminal type in a process of the network access, the access reason is measurement reporting, and the terminal type is the D2D master terminal.

4. The method according to any one of claims 1 to 3, wherein the synchronization resource comprises a time-frequency resource used to transmit the synchronization signal; and
the sending, by the D2D master terminal, the synchronization signal according to the synchronization resource allocated to the D2D master terminal comprises:
after receiving the time-frequency resource that is allocated by the network device to the D2D master terminal and used to transmit the synchronization signal, sending, by the D2D terminal, the synchronization signal immediately at a location of the allocated time-frequency resource used to transmit the synchronization signal; or
after receiving the time-frequency resource that is allocated by the network device to the D2D master terminal and used to transmit the synchronization signal and when receiving a synchronization instruction sent by the network device, sending, by the D2D terminal, the synchronization signal at a location of the allocated time-frequency resource used to transmit the synchronization signal, wherein the synchronization instruction is sent by the network device when the network device learns that a D2D slave terminal corresponding to the D2D terminal accesses the network.

5. The method according to claim 4, wherein the synchronization resource further comprises a time-frequency resource used to transmit synchronization feedback information; and the method further comprises:
receiving, by the D2D master terminal according to the time-frequency resource used to transmit the synchronization feedback information, the synchronization feedback information sent by the D2D slave terminal corresponding to the D2D master terminal, and decreasing transmit power of the synchronization signal when the received synchronization feedback information is a power decreasing instruction.

6. The method according to claim 5, wherein if a quantity of D2D slave terminals corresponding to the D2D master terminal is at least 2, the D2D master terminal decreases the transmit power of the synchronization signal after power decreasing instructions sent by all the D2D slave terminals corresponding to the D2D master terminal are received.

7. A method for initial synchronization between device-to-device D2D terminals, wherein the method comprises:
acquiring, by a D2D slave terminal, a synchronization resource of a D2D master terminal corresponding to the D2D slave terminal, wherein the synchronization resource comprises a time-frequency resource used to transmit a synchronization signal;
receiving, by the D2D slave terminal according to the time-frequency resource that is used to transmit the synchronization signal and is in the acquired synchronization resource, the synchronization signal sent by the D2D master terminal corresponding to the D2D slave terminal; and
performing, by the D2D slave terminal according to the received synchronization signal, synchronization with the D2D master terminal corresponding to the D2D slave terminal.

8. The method according to claim 7, wherein the acquiring, by a D2D slave terminal, a synchronization resource of a D2D master terminal corresponding to the D2D slave terminal comprises:
performing, by the D2D slave terminal, signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determining a time-frequency resource used by the signal that is currently obtained by means of search as the time-frequency resource used by the D2D master terminal corresponding to the D2D slave terminal to transmit the synchronization signal; or
receiving, by the D2D slave terminal, the synchronization resource of the D2D master terminal corresponding to the D2D slave terminal, wherein the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

9. The method according to claim 8, wherein after initiating network access and accessing a network, the D2D slave terminal receives the synchronization resource of the D2D master terminal corresponding to the D2D slave terminal, wherein the synchronization resource is notified by the network device; and the D2D slave terminal reports a terminal type in a process of the network access, wherein the terminal type is the D2D slave terminal; and
the method further comprises: after receiving the synchronization resource of the D2D master terminal corresponding to the D2D slave terminal, initiating, by the D2D slave terminal, a process of releasing a link from the network device, wherein the synchronization resource is notified by the network device.

10. The method according to any one of claims 7 to 9, wherein the synchronization resource further comprises a time-frequency resource used to transmit synchronization feedback information; and the method further comprises:
sending, by the D2D slave terminal according to the time-frequency resource used to transmit the synchronization feedback information, the synchronization feedback information to the D2D master terminal corresponding to the D2D slave terminal.

11. The method according to claim 10, wherein the sending the synchronization feedback information to the D2D master terminal corresponding to the D2D slave terminal comprises:
if strength of the synchronization signal that is sent by the D2D master terminal corresponding to the D2D slave terminal and received by the D2D slave terminal exceeds a set threshold, sending a power decreasing instruction to the D2D master terminal corresponding to the D2D slave terminal, wherein the power decreasing instruction is used to instruct the D2D master terminal to decrease transmit power of the synchronization signal; or
if the D2D slave terminal completes, according to the received synchronization signal, synchronization with the D2D master terminal corresponding to the D2D slave terminal, sending a synchronization confirmation instruction to the D2D master terminal corresponding to the D2D slave terminal.

12. A method for initial synchronization between device-to-device D2D terminals, wherein the method comprises:
receiving, by a network device, a measurement result of a time-frequency resource set used to transmit a synchronization signal, wherein the measurement result is reported by a D2D master terminal;
allocating, by the network device, a synchronization resource to the D2D master terminal according to the measurement result; and
notifying, by the network device to the D2D master terminal, the synchronization resource allocated to the D2D master terminal.

13. The method according to claim 12, wherein the method further comprises:
notifying, by the network device to a D2D slave terminal corresponding to the D2D master terminal, the synchronization resource allocated to the D2D master terminal.

14. The method according to claim 12, wherein the method further comprises:
after learning that the D2D slave terminal corresponding to the D2D master terminal accesses a network, instructing, by the network device, the D2D master terminal to send the synchronization signal.

15. The method according to claim 12, wherein after receiving a message that is used to notify that the D2D slave terminal has camped on a macro cell and sent by the D2D slave terminal corresponding to the D2D master terminal, the network device instructs the D2D master terminal to stop sending the synchronization signal.

16. The method according to any one of claims 12 to 15, wherein the synchronization resource comprises a time-frequency resource used to transmit the synchronization signal, or comprises a time-frequency resource used to transmit the synchronization signal and a time-frequency resource used to transmit synchronization feedback information.

17. A device-to-device D2D terminal, comprising:
a measurement module, configured to measure a time-frequency resource set used to transmit a synchronization signal, and report a measurement result of the measurement module to a network device;
a synchronization resource configuration module, configured to receive a synchronization resource that is allocated by the network device to the D2D master terminal according to the measurement result measured and reported by the measurement module; and
a synchronization signal transmission module, configured to send the synchronization signal according to the synchronization resource that is allocated to the D2D master terminal and received by the synchronization resource configuration module.

18. The D2D terminal according to claim 17, wherein the measurement module is specifically configured to perform measurement according to the time-frequency resource set that is preset on the D2D master terminal and used to transmit the synchronization signal; or acquire, from a broadcast message sent by the network device, the time-frequency resource set used to transmit the synchronization signal, and perform measurement according to the acquired time-frequency resource set.

19. The D2D terminal according to claim 17, wherein the measurement module is specifically configured to report the measurement result to the network device after network access is initiated and a network is accessed, wherein a network access module of the D2D terminal reports an access reason and a terminal type in a process of the network access, the access reason is measurement reporting, and the terminal type is the D2D master terminal.

20. The D2D terminal according to any one of claims 17 to 19, wherein the synchronization resource comprises a time-frequency resource used to transmit the synchronization signal; and
the synchronization signal transmission module is specifically configured to: after the synchronization resource configuration module receives a time-frequency resource that is allocated by the network device to the D2D master terminal and used to transmit the synchronization signal, send the synchronization signal immediately at a location of the allocated time-frequency resource used to transmit the synchronization signal; or after a time-frequency resource that is allocated by the network device to the D2D master terminal and used to transmit the synchronization signal is received and when a synchronization instruction sent by the network device is received, send the synchronization signal at a location of the allocated time-frequency resource used to transmit the synchronization signal, wherein the synchronization instruction is sent by the network device when the network device learns that a D2D slave terminal corresponding to the D2D terminal accesses the network.

21. The D2D terminal according to claim 20, wherein the synchronization resource further comprises a time-frequency resource used to transmit synchronization feedback information; and
the synchronization signal transmission module is further configured to receive, according to the time-frequency resource used to transmit the synchronization feedback information, the synchronization feedback information sent by the D2D slave terminal corresponding to the D2D master terminal, and decrease transmit power of the synchronization signal when the received synchronization feedback information is a power decreasing instruction.

22. The D2D terminal according to claim 21, wherein the synchronization signal transmission module is specifically configured to: in a case in which a quantity of D2D slave terminals corresponding to the D2D master terminal is at least 2, decrease the transmit power of the synchronization signal after power decreasing instructions sent by all the D2D slave terminals corresponding to the D2D master terminal are received.

23. A device-to-device D2D terminal, comprising:
a synchronization resource configuration module, configured to acquire a synchronization resource of a D2D master terminal corresponding to the D2D slave terminal, wherein the synchronization resource comprises a time-frequency resource used to transmit a synchronization signal;
a synchronization signal transmission module, configured to receive, according to the time-frequency resource that is used to transmit the synchronization signal and is in the synchronization resource acquired by the synchronization resource configuration module, the synchronization signal sent by the D2D master terminal corresponding to the D2D slave terminal; and
a synchronization module, configured to perform, according to the received synchronization signal, synchronization with the D2D master terminal corresponding to the D2D slave terminal.

24. The D2D terminal according to claim 23, wherein the synchronization resource configuration module is specifically configured to perform signal search according to a time-frequency resource set that is preset on the D2D slave terminal and used to transmit the synchronization signal, and when a terminal identifier carried in a signal that is obtained by means of search is an identifier of the D2D master terminal corresponding to the D2D slave terminal, determine a time-frequency resource used by the signal that is currently obtained by means of search as the time-frequency resource used by the D2D master terminal corresponding to the D2D slave terminal to transmit the synchronization signal; or receive the synchronization resource of the D2D master terminal corresponding to the D2D slave terminal, wherein the synchronization resource is notified by a network device, the synchronization resource is allocated by the network device to the D2D master terminal according to a measurement result that is reported by the D2D master terminal corresponding to the D2D slave terminal, and the measurement result is a result of measuring the time-frequency resource set used to transmit the synchronization signal.

25. The D2D terminal according to claim 24, wherein the synchronization resource configuration module is specifically configured to: after the D2D slave terminal initiates network access and accesses a network, receive the synchronization resource of the D2D master terminal corresponding to the D2D slave terminal, wherein the synchronization resource is notified by the network device, a network access module of the D2D slave terminal reports a terminal type in a process of the network access, and the terminal type is the D2D slave terminal; and
the synchronization resource configuration module is further configured to instruct, after the synchronization resource of the D2D master terminal corresponding to the D2D slave terminal is received, the network access module of the D2D terminal to initiate a process of releasing a link from the network device, wherein the synchronization resource is notified by the network device.

26. The D2D terminal according to any one of claims 23 to 25, wherein the synchronization resource further comprises a time-frequency resource used to transmit synchronization feedback information; and
the synchronization signal transmission module is further configured to send, according to the time-frequency resource used to transmit the synchronization feedback information, the synchronization feedback information to the D2D master terminal corresponding to the D2D slave terminal.

27. The D2D terminal according to claim 26, wherein the synchronization signal transmission module is specifically configured to: when strength of the received synchronization signal sent by the D2D master terminal corresponding to the D2D slave terminal exceeds a set threshold, send a power decreasing instruction to the D2D master terminal corresponding to the D2D slave terminal, wherein the power decreasing instruction is used to instruct the D2D master terminal to decrease transmit power of the synchronization signal; or after synchronization with the D2D master terminal corresponding to the D2D slave terminal is completed according to the received synchronization signal, send a synchronization confirmation instruction to the D2D master terminal corresponding to the D2D slave terminal.

28. A network device, comprising:
a receiving module, configured to receive a measurement result of a time-frequency resource set used to transmit a synchronization signal, wherein the measurement result is reported by a D2D master terminal;
a synchronization resource allocation module, configured to allocate a synchronization resource to the D2D master terminal according to the measurement result received by the receiving module; and
a notification module, configured to notify, to the D2D master terminal, the synchronization resource allocated by the synchronization resource allocation module to the D2D master terminal.

29. The network device according to claim 28, wherein the notification module is further configured to notify, to a D2D slave terminal corresponding to the D2D master terminal, the synchronization resource allocated to the D2D master terminal.

30. The network device according to claim 28, wherein the notification module is further configured to: after it is learned that the D2D slave terminal corresponding to the D2D master terminal accesses a network, instruct the D2D master terminal to send the synchronization signal.

31. The network device according to claim 28, wherein the notification module is further configured to: after a message that is used to notify that the D2D slave terminal has camped on a macro cell and sent by the D2D slave terminal corresponding to the D2D master terminal is received, instruct the D2D master terminal to stop sending the synchronization signal.

32. The network device according to any one of claims 28 to 31, wherein the synchronization resource comprises a time-frequency resource used to transmit the synchronization signal, or comprises a time-frequency resource used to transmit the synchronization signal and a time-frequency resource used to transmit synchronization feedback information.
